# FASCICULE DE BREVET EUROPEEN

(11) **EP 0 603 092 B1**
(45) Date de publication et mention de la délivrance du brevet: **22.10.1997**
(21) Numéro de dépôt: 93460036.2
(22) Date de dépôt: 25.11.1993
(51) Int. Cl.: G02B 27/00

(54) **Système de visualisation monté sur casque**
Auf einen Helm montiertes Anzeigesystem
Helmet mounted visualization system

(30) Priorité: 27.11.1992 FR 9214489
(43) Date de publication de la demande: 22.06.1994
(73) Titulaire: SEXTANT AVIONIQUE S.A., F-92366 Meudon la Forêt Cédex (FR)
(72) Inventeur: Perbet, Jean-Noel, F-33320 Eysines (FR); Barbier, Bruno, F-33000 Bordeaux (FR); Favot, Jean-Jacques, F-33127 Martignas/Jalle (FR); Lach, Patrick, F-33200 Bordeaux (FR)
(74) Mandataire: Fournier, Michel Robert Marie

(56) Documents cités:
- EP-A- 0 330 184
- EP-A- 0 370 640
- EP-A- 0 460 983
- WO-A-91/04508
- GB-A- 2 238 627
- JP-A- 2 242 218
- JP-A- 4 294 316
- US-A- 4 757 714
- US-A- 5 072 209
- AIRCRAFT ENGINEERING vol. 47, no. 7 , Juillet 1975 pages 22 - 32 'PARIS - IN RETROSPECT'

## Description

L'invention concerne un système de visualisation pour fournir des informations notamment aux pilotes d'aéronefs ou d'engins spatiaux, ou aux aéronautes, en particulier dans le cas des sorties extra-véhiculaires en scaphandre. Ce système est applicable notamment à la présentation d'alarme ou pour lutter contre la désorientation spatiale du pilote.

Un système connu sous le nom "d'horizon de Malcolm" développé pour lutter contre la désorientation des pilotes consiste à projeter un fin faisceau lumineux parallèle à l'horizon artificiel de l'aéronef. Ce faisceau est projeté sur la planche de bord et les parois du cockpit de façon à faire apparaître une droite mobile parallèle à l'horizon réel. Ce faisceau peut être obtenu à l'aide d'une lampe à incandescence ou à arc associée à une optique grand champ. On peut aussi utiliser un laser HeNe dévié à l'aide de déflecteurs électromécaniques. Ce dispositif est placé à une position fixe dans le cockpit, par exemple au-dessus de l'épaule du pilote de manière à limiter les masques visuels.

Un tel dispositif présente de nombreux inconvénients. Tout d'abord, une forte proportion de la projection est effectuée en vision centrale, ce qui perturbe la lecture et l'exploitation des informations dans cette zone. D'autre part, la projection qui est effectuée dans le cockpit sur un milieu non maîtrisé peut introduire des distorsions géométriques ou lumineuses importantes (réflectivité variable, équipements non plans). De plus, la source lumineuse nécessite soit une optique grand champ volumineuse, soit des dispositifs de déviation d'un faisceau laser et souvent des alimentations électriques haute tension. Par ailleurs, la puissance de la source lumineuse pose des problèmes de sécurité en particulier dans le cas de sources de rayons laser. Enfin, la disposition dans la cabine crée des obstructions visuelles et surtout mécaniques non compatibles avec les nécessités d'éjection du pilote.

Un autre système de visualisation connu comporte un dispositif d'affichage de symboles placé sur un support porté par la tête du pilote, et un générateur de symboles relié au circuit de commande du dispositif d'affichage, voir par exemple US-A-5 072 209.

L'invention a pour but de remédier à tous ces inconvénients en proposant un système de visualisation qui exploite la vision périphérique de l'oeil.

Contrairement à la vision centrale qui est principalement utilisée pour la vision des détails fins et des couleurs, la vision périphérique permet la perception des détails grossiers, de l'attitude de l'observateur, des mouvements et des menaces. La vision périphérique peut donc avantageusement être exploitée pour informer les pilotes des mouvements et des attitudes de l'aéronef ou de l'engin spatial pour lutter contre la désorientation, en particulier en cas de mauvaise visibilité extérieure à l'aéronef.

Plus précisément, l'invention a pour objet le système de visualisation défini dans la revendication 1.

Le fait de prévoir un dispositif d'affichage porté par la tête du pilote, par exemple en le fixant sur son casque, et placé dans son champ de vision périphérique, c'est-à-dire de façon à ne pas pouvoir normalement être observé en vision centrale quelle que soit la position de l'oeil, permet donc de minimiser les masques visuels et les obstructions mécaniques. De plus, la vision centrale n'est pas perturbée, ce qui permet une compatibilité avec les viseurs visuels de casques classiques ou les systèmes de vision nocturne. Cette compatibilité est à la fois spatiale car les systèmes de vision centrale et périphérique sont séparés, et spectrale car les systèmes d'aide à la vision nocturne ne peuvent pas, par construction, intercepter l'image des écrans en périphérie.

L'invention a également pour objet le système de visualisation de la revendication 1 muni en outre de dispositifs d'affichage particuliers utilisant par exemple des écrans matriciels lumineux ou des systèmes de projection pouvant utiliser directement la visière du casque.

L'invention concerne également diverses applications du système de visualisation et d'autres aspects et détails de réalisation du système qui apparaîtront dans la suite de la description en référence aux figures.
- La figure 1 représente le système de visualisation selon l'invention ;
- les figures 2 à 6 montrent quelques exemples de symboles pouvant être affichés par le système selon l'invention ;
- les figures 7 à 9 montrent la disposition de dispositifs d'affichage montés sur un casque ;
- les figures 10 et 11 représentent des dispositifs d'affichage utilisant des systèmes de projection sur la visière du casque ;
- les figures 12 à 15 représentent des variantes de réalisation d'écrans utilisables avec le système de projection des figures 10 et 11.

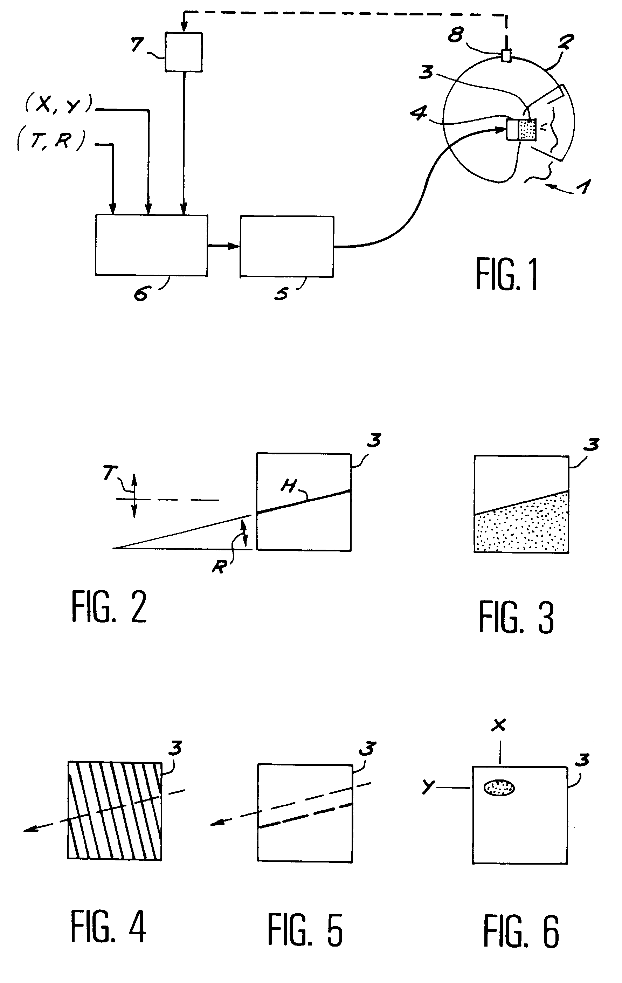

La figure 1 représente le schéma de principe du système de visualisation selon l'invention. Le casque 2 qui est porté par la tête 1 du pilote ou de l'astronaute est muni d'un dispositif d'affichage 3, 4 commandé par un circuit de commande d'affichage 5. Le circuit 5 est relié à un générateur de symboles 6 fournissant des signaux d'images en fonction de divers paramètres reçus des systèmes électroniques de l'aéronef. Le générateur 6 peut recevoir par exemple des informations de direction x, y d'une menace détectée par un radar embarqué. Pour engendrer un horizon artificiel, le générateur 6 reçoit des informations d'inclinaison T, R fournies par la centrale inertielle de l'aéronef. Il reçoit d'autre part des signaux de position angulaire de la tête du pilote à partir d'un capteur 7 coopérant avec un émetteur 8 placé sur le casque. Le dispositif de détection de position et d'orientation de tête constitué des éléments 7 et 8 utilise de façon classique des radiations électromagnétiques ou infrarouges.

Le dispositif d'affichage peut être réalisé au moyen d'un écran matriciel 3 émissif à diodes électroluminescentes, ou électroluminescent à couches minces commandé par une électronique d'adressage 4. Ce type d'écran présente l'avantage d'être quasi transparent et donc de ne pas introduire de masque visuel supplémentaire. L'écran peut être de basse résolution (supérieure à 1 mm), adapté à l'acuité visuelle qui est limitée en vision périphérique. La longueur d'onde d'émission peut être quelconque car la sensibilité chromatique en vision périphérique est fortement réduite. L'électronique d'adressage peut être de type multiplexé comme cela est couramment utilisé dans les écrans matriciels. La fréquence de rafraîchissement devra être élevée (supérieure à 100 Hertz) de manière à réduire les effets de papillotements ("flicker").

Selon une autre possibilité, l'écran matriciel est de type non-émissif éclairé.

Le générateur de symboles 6 peut être réalisé au moyen d'un système à microprocesseur de type classique programmé de façon à fournir les signaux d'adressage correspondants aux divers symboles que l'on souhaite afficher. Le générateur 6 pourra inclure avantageusement des procédés d'amélioration de la qualité de tracé tels que des procédés de lissage. Le circuit de commande 5 constitue l'interface de sortie du générateur 6 et peut être relié au circuit d'adressage 4 par l'intermédiaire d'une liaison série. Avantageusement, le générateur de symboles, le circuit de commande et les alimentations associées sont déportées de façon à réduire au maximum le supplément de poids du casque.

La figure 2 montre un premier exemple de symboles H représentant un horizon artificiel. L'horizon a la forme d'une ligne continue dont l'inclinaison est fonction de l'angle de roulis R et dont la hauteur sur l'écran est fonction de l'angle de tangage T. Les angles R et T sont évidemment corrigés en fonction des angles d'inclinaison de la tête.

La figure 3 représente une variante de réalisation de l'horizon artificiel H selon laquelle la ligne définie précédemment sépare deux surfaces contrastées de façon à permettre de mieux percevoir le haut et le bas.

La figure 4 représente un autre symbole permettant de visualiser la vitesse de l'avion. Ce symbole est constitué d'une pluralité de lignes inclinées en fonction de l'attitude de l'avion et animées d'un défilement asservi à sa vitesse.

Selon une variante représentée à la figure 5, les barres inclinées sont remplacées par des tirets inclinés en fonction de l'attitude de l'avion et défilant en fonction de sa vitesse.

La figure 6 représente un exemple de symbole d'alarme ayant la forme d'une tache dont la position x, y sur l'écran indique la direction d'une menace par exemple détectée par un radar embarqué.

Tous les exemples précédents sont donnés à titre purement illustratif et l'homme de métier est en mesure d'imaginer d'autres symboles applicables en fonction de contextes particuliers tels que ceux de l'astronautique. Ainsi par exemple, dans le cas des sorties extra-véhiculaires d'un astronaute, un symbole en forme de tache pourra indiquer la direction dans laquelle se trouve l'engin spatial.

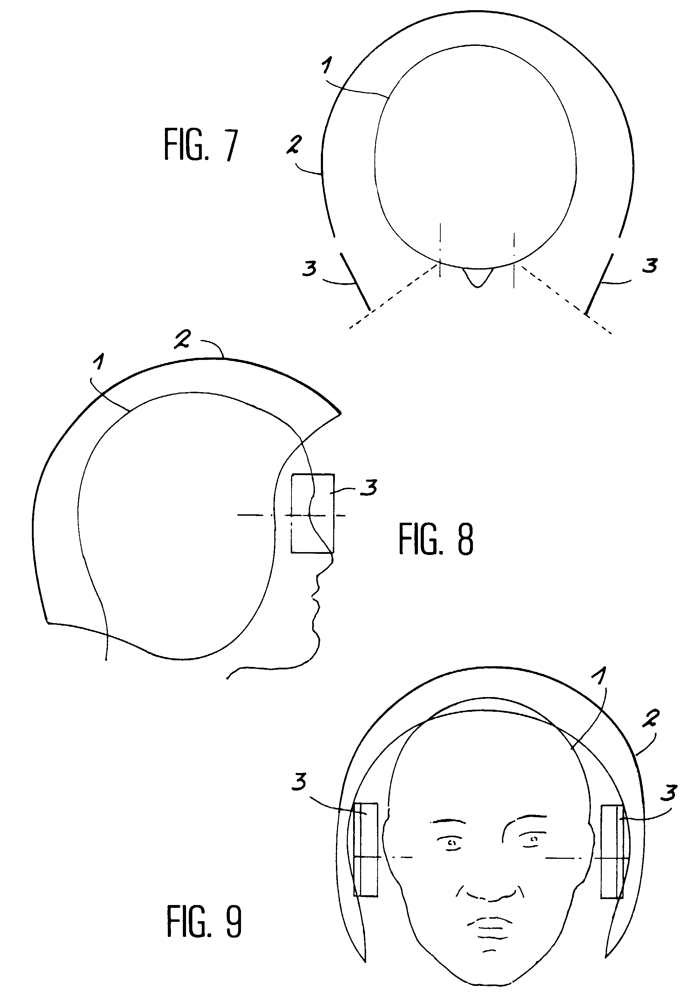

Les figures 7 à 9 montrent un exemple d'implantation d'un dispositif d'affichage à écran plat sur un casque 2. Les écrans 3 sont situés dans la zone latérale du champ visuel du pilote, par exemple entre 60 et 90°.

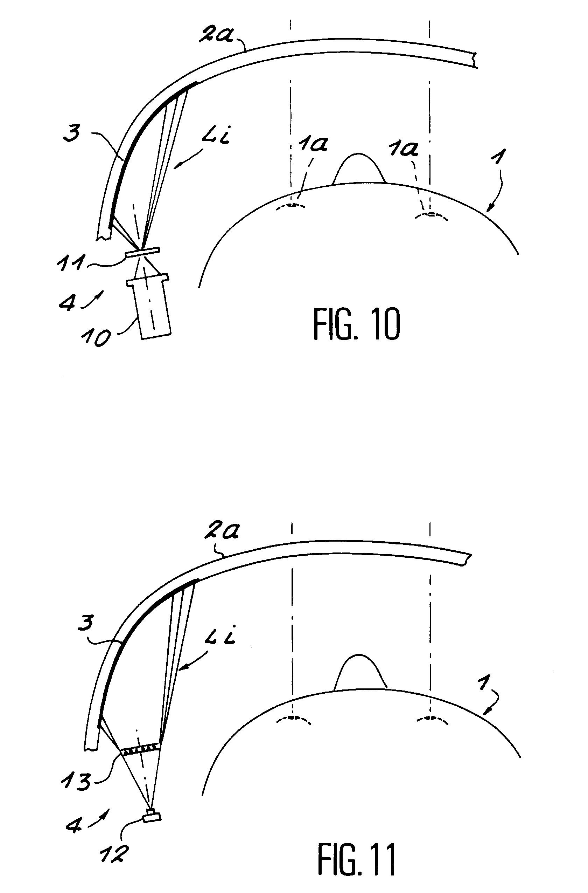

Les figures 10 et 11 sont des vues de dessus d'une tête 1 portant un casque muni d'une visière 2a. Ces figures illustrent un autre mode de réalisation du dispositif d'affichage consistant à utiliser directement la visière teintée du casque qui intercepte des faisceaux lumineux Li en formant des taches observées sans accommodation de l'oeil. Les faisceaux lumineux Li sont projetés sur les parois latérales de la visière de façon à exploiter la vision périphérique.

Selon la figure 10, un système de projection est composé d'une source 10 associée à un élément optique simple 11 tel qu'un diaphragme ou une lentille. La source 10 est constituée d'un ensemble de surfaces élémentaires émissives tel qu'un tube à rayons cathodiques ou un panneau de diodes électroluminescentes. Cette association 10-11 produit des pinceaux lumineux Li directifs associés respectivement aux surfaces élémentaires émissives dont les puissances sont modulables séparément en réponse aux signaux de commande émis par le circuit de commande d'affichage 5.

La figure 11 représente un autre mode de réalisation consistant à associer une valve optique 13, telle qu'une matrice à cristal liquide, à une source de lumière 12 telle qu'une diode électroluminescente, une diode laser ou une lampe à incandescence qui éclaire l'ensemble de la surface utile de la valve. Comme précédemment, cet ensemble produit des pinceaux Li directifs et modulables. Chacun des pinceaux Li est associé à une surface élémentaire de la valve 13 qui sélectionne l'un des pinceaux parmi l'ensemble des rayons issus de la source et qui module sa puissance.

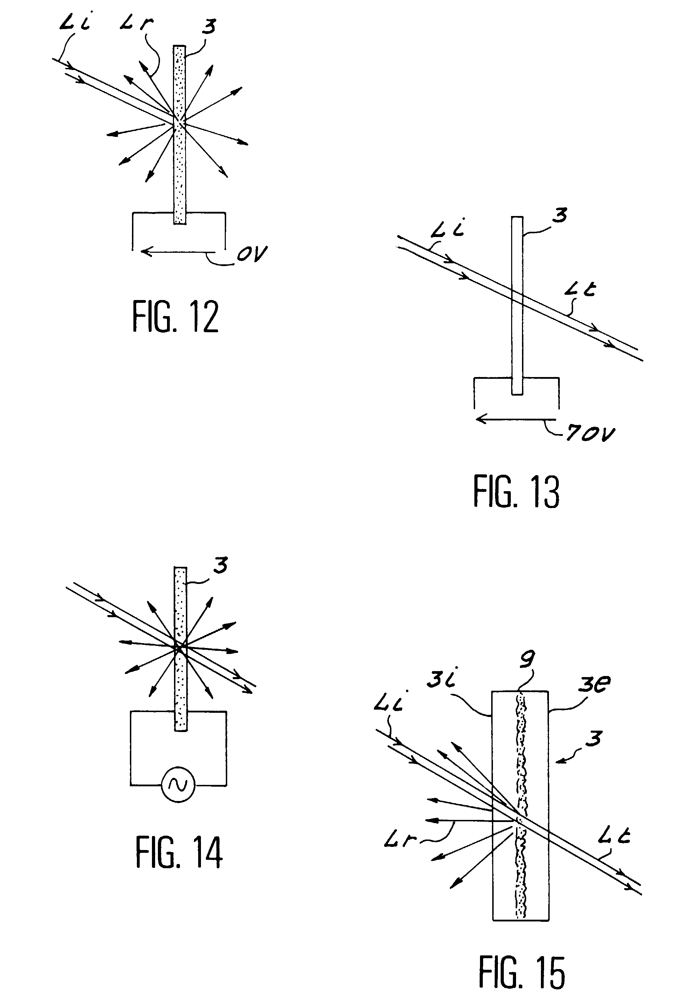

Les figures 12 à 14 illustrent un autre mode de réalisation de l'écran 3 utilisant un composant à cristal liquide couramment appelé PDLC ("Polymer Dispersed Liquid Crystal"). Ce composant a la propriété que la part de lumière qu'il transmet Lt et la part de lumière qu'il diffuse Lr sont modulables en fonction d'une tension électrique qu'on lui applique. Lorsque la tension est nulle (figure 12), le composant est totalement diffusant. Lorsque la tension a une valeur de l'ordre de 70 volts, le composant est totalement transparent (figure 13). Ainsi, en faisant osciller la tension de commande entre ces deux valeurs extrêmes (figure 14), on obtient un composant partiellement diffusant et partiellement transparent. On choisira de préférence une fréquence d'oscillation en fonction de la réponse du composant et de façon à ce que l'oeil ne perçoive pas les changements d'état. Il en résulte que les points d'impacts des pinceaux lumineux Li sur la surface du composant sont perceptibles tout en garantissant la vision simultanée du paysage extérieur.

La figure 15 représente un second mode de réalisation de l'écran 3 utilisant des matériaux optiques classiques (verre, plastique). L'écran 3 est constitué de deux lames 3i, 3e collées l'une sur l'autre. Les deux faces externes des lames sont polies et parallèles entre elles. L'une au moins des faces internes 9 est dépolie et supporte un traitement semi-réfléchissant. La lumière transmise Lt par le traitement ne subit ni déviation, ni diffusion, car elle traverse une lame à face parallèle et d'indice homogène. La lumière réfléchie Lr par le traitement est diffusée dans toutes les directions car elle se réfléchit sur les irrégularités à orientation aléatoire de la surface dépolie.

## Revendications

1. Système de visualisation notamment pour pilote d'aéronef ou d'engin spatial comportant un support (2) destiné à être porter par la tête (1) du pilote, un dispositif d'affichage de symboles (3, 4) placé sur ledit support (2) de façon à se trouver à proximité des yeux du pilote, un circuit de commande (5) du dispositif d'affichage (3, 4) et un générateur de symboles (6) relié audit circuit de commande (5), caractérisé en ce que ledit dispositif d'affichage (3, 4) est disposé de façon à se trouver dans le champ de vision périphérique du pilote.

2. Système de visualisation selon la revendication 1, caractérisé en ce que ledit dispositif d'affichage (3, 4) est composé d'un écran matriciel (3) et d'un circuit d'adressage (4) dudit écran matriciel (3).

3. Système de visualisation selon la revendication 2, caractérisé en ce que ledit écran matriciel (3) est un écran émissif.

4. Système de visualisation selon la revendication 2, caractérisé en ce que ledit écran matriciel (3) est un écran non-émissif éclairé.

5. Système de visualisation selon la revendication 1, caractérisé en ce que ledit dispositif d'affichage (3, 4) est composé d'un écran (3) et d'un système de projection (4) permettant d'envoyer sur ledit écran (3) un ensemble de pinceaux lumineux (Li) directifs et modulables séparément en intensité.

6. Système de visualisation selon la revendication 5, caractérisé en ce que ledit écran (3) du dispositif d'affichage est partiellement diffusant en réflexion.

7. Système de visualisation selon la revendication 6, caractérisé en ce que ledit écran (3) est partiellement transparent.

8. Système de visualisation selon l'une des revendications 1 à 7 destiné à l'aide à la désorientation d'un pilote d'aéronef ou d'engin spatial, caractérisé en ce qu'il comprend des moyens permettant audit générateur de symboles d'engendrer un horizon artificiel (H) asservi à l'attitude (T, R) de l'avion et à la position angulaire de la tête (1) du pilote.

9. Système de visualisation selon la revendication 8, caractérisé en ce que ledit horizon artificiel (H) est animé d'un défilement asservi à la vitesse de l'aéronef ou de l'engin spatial.

10. Système de visualisation selon l'une des revendications 1 à 7, caractérisé en ce que le générateur de symboles (6) est adapté à l'affichage de symboles d'alarme.

11. Système de visualisation selon la revendication 10, caractérisée en ce que lesdits symboles d'alarme sont représentatifs d'une menace et positionnés sur ledit dispositif d'affichage (3, 4) de façon à indiquer la direction d'où vient la menace.

## Patentansprüche

1. Anzeigesystem insbesondere für den Piloten eines Luft- oder Raumfahrzeugs, mit einem Träger (2), der dazu bestimmt ist, vom Kopf (1) des Piloten getragen zu werden, einer Anzeigevorrichtung (3, 4) für Symbole, die auf dem genannten Träger (2) derart angeordnet ist, daß sie sich in der Nähe der Augen des Piloten befindet, einer Steuerschaltung (5) für die Anzeigevorrichtung (3, 4) und einem Symbolgenerator (6), der mit der genannten Steuerschaltung (5) verbunden ist, dadurch gekennzeichnet, daß die genannte Anzeigevorrichtung (3, 4) derart angeordnet ist, daß sie sich im peripheren Blickfeld des Piloten befindet.

2. Anzeigesystem nach Anspruch 1, dadurch gekennzeichnet, daß die genannte Anzeigevorrichtung (3, 4) aus einem Matrix-Bildschirm (3) und einer Adressierschaltung (4) für den genannten Matrix-Bildschirm (3) zusammengesetzt ist.

3. Anzeigesystem nach Anspruch 2, dadurch gekennzeichnet, daß der genannte Matrix-Bildschirm (3) ein abstrahlender Bildschirm ist.

4. Anzeigesystem nach Anspruch 2, dadurch gekennzeichnet, daß der genannte Matrix-Bildschirm (3) ein nicht-abstrahlender, beleuchteter Bildschirm ist.

5. Anzeigesystem nach Anspruch 1, dadurch gekennzeichnet, daß die genannte Anzeigevorrichtung (3, 4) aus einem Bildschirm (3) und einem Projektionssystem (4) zusammengesetzt ist, das es gestattet, auf den genannten Bildschirm (3) eine Gruppe von Lichtstrahlenbündeln (Li) zu senden, die gerichtet und in der Intensität getrennt modulierbar sind.

6. Anzeigesystem nach Anspruch 5, dadurch gekennzeichnet, daß der genannte Bildschirm (3) der Anzeigevorrichtung teilweise reflektierend streut.

7. Anzeigesystem nach Anspruch 6, dadurch gekennzeichnet, daß der genannte Bildschirm (3) teilweise transparent ist.

8. Anzeigesystem nach einem der Ansprüche 1 bis 7, das zur Unterstützung des Piloten eines Luft- oder Raumfahrzeuges bei Orientierungsverlust bestimmt ist, dadurch gekennzeichnet, daß es Mittel aufweist, die es dem genannten Symbolgenerator gestatten, einen künstlichen Horizont (H) zu erzeugen, der von der Fluglage (T, R) des Flugzeugs und der Winkellage des Kopfes (1) des Piloten gesteuert ist.

9. Anzeigesystem nach Anspruch 8, dadurch gekennzeichnet, daß der genannte künstliche Horizont (H) zum Vorbeilaufen angeregt ist, gesteuert von der Geschwindigkeit des Luft- oder Raumfahrzeugs.

10. Anzeigesystem nach einem der Ansprüche 1 bis 7, dadurch gekennzeichnet, daß der Symbolgenerator (6) zur Anzeige von Alarmsymbolen eingerichtet ist.

11. Anzeigesystem nach Anspruch 10, dadurch gekennzeichnet, daß die genannten Alarmsymbole representativ für eine Bedrohung sind und auf der Anzeigevorrichtung (3, 4) derart angeordnet sind, daß sie die Richtung angeben, von der die Bedrohung herkommt.

## Claims

1. A display system, in particular for an aircraft or spacecraft pilot, comprising a support (2) designed to be worn on the pilot's head (1), a symbol display device (3, 4) mounted on the said support (2) so that it is close to the pilot's eyes, a control circuit (5) for the display device (3, 4) and a symbol generator (6) connected to the said control circuit (5), characterised in that the said display device (3, 4) is disposed so that it is in the peripheral field of vision of the pilot.

2. A display system as claimed in claim 1, characterised in that the said display device (3, 4) consists of a matrix screen (3) and an addressing circuit (4) of the said matrix screen (3).

3. A display system as claimed in claim 2, characterised in that the said matrix screen (3) is an emitting screen.

4. A display device as claimed in claim 2, characterised in that the said matrix screen (3) is an illuminated non-emitting screen.

5. A display system as claimed in claim 2, characterised in that the said display device (3, 4) consists of a matrix screen (3) and a projection system (4) which enables an array of directive light beams Li, whose strength can be separately modulated, to be projected onto the said screen (3).

6. A display system as claimed in claim 5, characterised in that the said screen (3) of the display device is partially diffusing in reflection.

7. A display system as claimed in claim 6, characterised in that the said screen (3) is partially transparent.

8. A display system as claimed in one of claims 1 to 7 designed as a disorientation aid to an aircraft or spacecraft pilot, characterised in that it has means enabling the said symbol generator to generate an artificial horizon (H) controlled by the attitude (T, R) of the aircraft and the angular position of the head (1) of the pilot.

9. A display system as claimed in claim 8, characterised in that the said artificial horizon (H) scrolls depending on the speed of the aircraft or spacecraft.

10. A display system as claimed in one of claims 1 to 7, characterised in that the symbol generator (6) is designed to display alarm signals.

11. A display system as claimed in claim 10, characterised in that the said alarm symbols represent a threat and are so located on the said display device (3, 4) as to indicate the direction from which the threat is originating.
